# EUROPEAN PATENT APPLICATION

(11) **EP 4 756 052 A1**
(43) Date of publication of application: **10.06.2026**
(21) Application number: 24862506.3
(22) Date of filing: 08.08.2024
(51) Int. Cl.: C22C 21/02, B21C 23/00, B23K 20/00, C22F 1/00, C22F 1/043

(54) **ALUMINUM ALLOY STRUCTURE, THERMAL BONDING METHOD, AND ALUMINUM ALLOY EXTRUDED MATERIAL AND METHOD FOR PRODUCING SAME**

(30) Priority: 05.09.2023 JP 2023143411
(71) Applicant: UACJ Corporation, Minato-ku, Tokyo 1080073 (JP)
(72) Inventor: TOMORI Ryo, Tokyo 100-0004 (JP); SUZUKI Taichi, Tokyo 100-0004 (JP); NAKAGAWA Ryogo, Tokyo 100-0004 (JP)
(74) Representative: Kramer Barske Schmidtchen Patentanwälte PartG mbB
(86) International application number: PCT/JP2024/028359
(87) International publication number: WO 2025/052852

(57) **Abstract**

Provided is an aluminum alloy structure comprising one member to be joined and another member to be joined that are thermally joined together. The one member to be joined comprises 1.80 to 3.00 mass % of Si, 0.10 to 1.60 mass % of Mn, and 0.01 to 0.70 mass % of Fe, with the balance being Al and unavoidable impurities. An average grain size is 200 µm or less in an outermost layer of the one member to be joined in a joined part between the one member to be joined and the other member to be joined. An average grain size is 400 µm or more in a section at a position with a depth of 100 µm of a part having the smallest wall thickness of the one member to be joined. The present invention can provide an aluminum alloy structure, and an aluminum alloy extruded material and a method for producing the same that can simplify manufacturing processes because of being joinable with a single layer, the aluminum alloy structure, and the aluminum alloy extruded material and the method for manufacturing the same having good joining performance and being capable of inhibiting deformation during thermal joining.

## Description

### TECHNICAL FIELD

The present invention relates to an aluminum alloy structure, a thermal joining method, and an aluminum alloy extruded material and a method for producing the same, and in particular, to an aluminum alloy structure that can be joined to another member by its own action without using a joining member such as a brazing material or a filler material, and an aluminum alloy extruded material and a method for producing the same.

### BACKGROUND ART

In manufacturing a structure such as a heat exchanger including aluminum alloy materials as components, it is necessary to join the aluminum alloy materials together. Various methods are known for joining aluminum alloy materials, among which brazing is often used.

As a method for manufacturing a heat exchanger or the like using a method for joining aluminum alloy materials by brazing, for example, there is a method using a brazing sheet of a clad material cladded with a brazing material comprising an Al-Si alloy (Patent Literature 1). However, manufacturing the clad material has a manufacturing drawback in that layers must be manufactured separately and then overlaid on each other and joined together, making the manufacturing process complicated.

As other methods for manufacturing a heat exchanger or the like using the method for joining aluminum alloy materials by brazing, a method using aluminum alloy materials coated with a powdered brazing material and a method of assembling materials and then separately placing or applying a brazing material such as a placed brazing material or a brazing paste to the parts requiring joining are known (Patent Literature 2 and Patent Literature 3). However, these methods even have a manufacturing drawback in that they need a step of separately preparing the brazing material, and placing or applying the brazing material apart from the aluminum alloy materials, making the manufacturing process complicated.

Given these circumstances, instead of the method using a brazing sheet of a clad material or the method using aluminum alloy materials coated with a powdered brazing material described above, which complicate the manufacturing process of the aluminum alloy materials and the manufacturing process of the aluminum alloy structure, there is a method using a single layer brazing sheet as a method that simplifies the manufacturing process of the aluminum alloy materials and the manufacturing process of the aluminum alloy structure (Patent Literature 4).

### CITATION LIST

### PATENT LITERATURE

Patent Literature 1: Japanese Patent Publication 2008-303405-A
Patent Literature 2: Japanese Patent Publication 2011-136358-A
Patent Literature 3: Japanese Patent Publication H09-047892-A
Patent Literature 4: International Publication No. 2014/184880

### SUMMARY OF INVENTION

### Technical Problem

However, since the single layer brazing sheet is made joinable by its partial melting, there is a concern that the material may deform noticeably when heated.

In addition, since the single layer brazing sheet is joined to another member through its own action (a liquid phase that oozes out from a matrix) without using a joining member such as a brazing material or a filler material, the amount of a liquid phase used for brazing joint is smaller than that of the conventional methods using a brazing sheet cladded with a brazing material or using aluminum alloy materials coated with a powdered brazing material, which may lower thermal joining performance.

Thus, an object of the present invention is to provide an aluminum alloy structure and an aluminum alloy extruded material that can simplify manufacturing processes because of being joinable with a single layer, the aluminum alloy structure and the aluminum alloy extruded material having good joining performance and being capable of inhibiting deformation during thermal joining.

### Solution to Problem

The inventors of the present invention have conducted intensive studies to invent, as members to be joined together, an aluminum alloy structure that can simplify a manufacturing process by being joinable with a single layer, has good joining performance, and can inhibit deformation during thermal joining, and an aluminum alloy extruded material and a method for producing the same by controlling an alloy composition and a crystalline structure.

That is, the present invention (1) provides an aluminum alloy structure comprising one member to be joined formed of an aluminum alloy and another member to be joined formed of either an aluminum alloy or pure aluminum, the members being thermally joined together,
the one member to be joined comprising 1.80 to 3.00 mass % of Si, 0.10 to 1.60 mass % of Mn, and 0.01 to 0.70 mass % of Fe, with the balance being Al and unavoidable impurities, and
an average grain size being 200 µm or less in an outermost layer of the one member to be joined in a joined part between the one member to be joined and the other member to be joined, and an average grain size being 400 µm or more in a section at a position with a depth of 100 µm of a part having the smallest wall thickness of the one member to be joined.

The present invention (2) provides a thermal joining method for the aluminum alloy structure according to (1), the thermal joining method comprising causing a metallographic structure at 575°C during thermal joining to have an average grain size in an outermost layer of a face to be joined of 200 µm or less and an average grain size in a section at a position with a depth of 100 µm of a part having the smallest wall thickness of 400 µm or more.

The present invention (3) provides an aluminum alloy extruded material having a thermal joining function with a single layer, the aluminum alloy extruded material comprising 1.80 to 3.00 mass % of Si, 0.10 to 1.60 mass % of Mn, and 0.01 to 0.70 mass % of Fe, with the balance being Al and unavoidable impurities,
a width of a part having the smallest wall thickness in a section perpendicular to an extrusion direction being 0.6 mm or more, and
an average grain size in an outermost layer of a face to be joined being 200 µm or less, and an average grain size in a section at a position with a depth of 100 µm of a part having the smallest wall thickness being 400 µm or more after a heating test that increases a temperature from 450°C to 575°C over 4 to 15 minutes, and holds at 575 to 615°C for 5 to 40 minutes.

The present invention (4) provides a method for producing the aluminum alloy extruded material according to (3), the method comprising:
a casting step of casting an ingot comprising 1.80 to 3.00 mass % of Si, 0.10 to 1.60 mass % of Mn, and 0.01 to 0.70 mass % of Fe, with the balance being Al and unavoidable impurities; and
a hot extruding step of hot extruding the ingot while a temperature of the ingot is 400°C or more and 550°C or less to form a shape having a width of a part having the smallest wall thickness in a section perpendicular to an extrusion direction of 0.6 mm or more.

The present invention (5) provides the method for producing the aluminum alloy extruded material according to (4), further comprising a homogenizing step of performing a homogenizing treatment that holds the ingot at a temperature of 570°C or less after the casting step.

### Advantageous Effect of Invention

The present invention can provide an aluminum alloy structure and an aluminum alloy extruded material that can simplify manufacturing processes because of being joinable with a single layer, the aluminum alloy structure and the aluminum alloy extruded material having good joining performance and being capable of inhibiting deformation during thermal joining.

### BRIEF DESCRIPTION OF DRAWINGS

FIG. 1 is a schematic state diagram of an Al-Si alloy, which is a typical binary eutectic alloy.
FIG. 2 is an illustrative diagram of the mechanism of formation of a liquid phase, in joining using an aluminum alloy extruded material of the present invention, in an aluminum alloy forming the aluminum alloy extruded material of the present invention.
FIG. 3 is an illustrative diagram of the mechanism of formation of the liquid phase, in joining using the aluminum alloy extruded material of the present invention, in the aluminum alloy forming the aluminum alloy extruded material of the present invention.
FIG. 4 is a schematic state diagram of the Al-Si alloy, which is a typical binary eutectic crystal.
FIG. 5 is a sectional microstructural observation result in a wall thickness direction after a heating test simulating the thermal joining of the aluminum alloy extruded material of the present invention.
FIG. 6 is a microstructural observation result of a section perpendicular to the depth direction of an outermost layer after the heating test simulating the thermal joining of the aluminum alloy extruded material of the present invention.
FIG. 7 is a microstructural observation result of a section perpendicular to the depth direction at a position with a depth of 100 µm after the heating test simulating the thermal joining of the aluminum alloy extruded material of the present invention.
FIG. 8 is a combination diagram of an inverted T-shaped joining test.

### DESCRIPTION OF EMBODIMENTS

An aluminum alloy structure of the present invention is an aluminum alloy structure comprising one member to be joined formed of an aluminum alloy and another member to be joined formed of either an aluminum alloy or pure aluminum, the members being thermally joined together,
the one member to be joined comprising 1.80 to 3.00 mass % of Si, 0.10 to 1.60 mass % of Mn, and 0.01 to 0.70 mass % of Fe, with the balance being Al and unavoidable impurities, and
an average grain size being 200 µm or less in an outermost layer of the one member to be joined in a joined part between the one member to be joined and the other member to be joined, and an average grain size being 400 µm or more in a section at a position with a depth of 100 µm of a part having the smallest wall thickness of the one member to be joined.

The aluminum alloy structure of the present invention is an aluminum alloy structure in which one member to be joined formed of an aluminum alloy and another member to be joined formed of either an aluminum alloy or pure aluminum are thermally joined together.

The one member to be joined according to the aluminum alloy structure of the present invention comprises an aluminum alloy. In other words, the one member to be joined is an aluminum alloy material and is formed of an aluminum alloy.

The aluminum alloy forming the one member to be joined comprises 1.80 to 3.00 mass % of Si, 0.10 to 1.60 mass % of Mn, and 0.01 to 0.70 mass % Fe, with the balance being Al and unavoidable impurities.

Si is an element that generates an Al-Si-based liquid phase during thermal joining to contribute to joining. If the Si content of the aluminum alloy is less than 1.80 mass %, a sufficient amount of the liquid phase cannot be generated, resulting in poor joining performance. If the Si content exceeds 3.00 mass %, the aluminum alloy comprises a lot of single Si, causing a concern about significant wear in a tool in the manufacturing process of the aluminum alloy material. Therefore, the Si content of the aluminum alloy forming the one member to be joined is specified as 1.80 to 3.00 mass %. The lower limit value of the Si content of the aluminum alloy forming the one member to be joined is preferably 2.00 mass %. The upper limit value of the Si content of the aluminum alloy forming the one member to be joined is preferably 2.80 mass %. The Si content can be a range with the above upper limit value and lower limit value combined.

Mn is an element that adjusts the crystalline structure of the aluminum alloy material to contribute to improving thermal joining performance and inhibiting deformation during thermal joining. If the Mn content of the aluminum alloy is less than 0.10 mass %, the grain size according to the present invention cannot be obtained, and deformation during thermal joining becomes larger. If the Mn content exceeds 1.60 mass %, the deformation resistance of the aluminum alloy material becomes larger, and there is a concern that machining may become difficult in the manufacturing process of the aluminum alloy material. Therefore, the Mn content of the aluminum alloy forming the one member to be joined is specified as 0.10 to 1.60 mass %. The lower limit value of the Mn content of the aluminum alloy forming the one member to be joined is preferably 0.20 mass %, and more preferably 0.30 mass %. The upper limit value of the Mn content of the aluminum alloy forming the one member to be joined is preferably 1.40 mass %, more preferably 1.20 mass %, more preferably 1.00 mass %, and more preferably 0.80 mass %. The Mn content can be a range with the above upper limit value and lower limit value combined.

Fe is an element that contributes to improving the strength of the aluminum alloy material. If the Fe content of the aluminum alloy is less than 0.01 mass %, it is necessary to use an aluminum ingot with extremely high purity for manufacture, which increases the cost. If the Fe content exceeds 0.70 mass %, an Al-Fe-Si compound is generated, which reduces the amount of Si that contributes to the formation of the liquid phase during thermal joining, thus reducing thermal joining performance. Therefore, the Fe content of the aluminum alloy forming the one member to be joined is specified as 0.01 to 0.70 mass %. The lower limit value of the Fe content of the aluminum alloy forming the one member to be joined is preferably 0.05 mass %, more preferably 0.10 %, and more preferably 0.15 mass %. The upper limit value of the Fe content of the aluminum alloy forming the one member to be joined is preferably 0.60 mass %, more preferably 0.50 mass %, and more preferably 0.40 mass %. The Fe content can be a range with the above upper limit value and lower limit value combined.

The other member to be joined according to the aluminum alloy structure of the present invention comprises an aluminum alloy or pure aluminum. In other words, the other member to be joined is an aluminum alloy material or a pure aluminum material, and is formed of an aluminum alloy or pure aluminum. When the other member to be joined comprises an aluminum alloy, the other member to be joined may have the same alloy composition as the aluminum alloy material forming the one member to be joined or a different alloy composition therefrom.

Next, the metallographic structure of the aluminum alloy structure of the present invention will be described.

The metallographic structure of the one member to be joined of the aluminum alloy structure of the present invention has fine grains in a joining face in order to improve thermal joining performance, and has coarse grains inside the material in order to inhibit deformation during thermal joining. These metallographic structures should actually be achieved immediately before forming the liquid phase. However, since the metallographic structure is usually maintained also after the end of thermal joining, the metallographic structure can be confirmed by any of a structure after thermal joining, a material that has undergone a heating test simulating thermal joining, and a material that has been heated until immediately before the liquid phase formation and then cooled. One form of heat treatment includes performing heating to 580°C to 620°C at an average temperature increase rate of 5 to 100°C/min, heating to hold at 580°C to 620°C for about 0 minutes to 20 minutes, and then cooling.

In a joined part between the one member to be joined and the other member to be joined of the aluminum alloy structure of the present invention, the average grain size in an outermost layer of the one member to be joined is 200 µm or less. The average grain size in the outermost layer is measured in a section with a depth of 0 to 10 µm along the surface of the one member to be joined (that is, a section perpendicular to the depth direction at a position with a depth of 0 to 10 µm) with the surface of the face to be joined of the one member to be joined as a depth reference (a zero position). However, since the liquid phase generated from the one member to be joined is present in the joined part, the position of the surface of the one member to be joined may not be able to be clearly identified. In this case, the average grain size in the outermost layer can also be measured in a section with a depth of 0 to 10 µm along the surface of the one member to be joined, with the surface of the one member to be joined as the depth reference, in an area near the joined part that can be regarded as being equivalent to the joining face of the one member to be joined.

The average grain size in the outermost layer affects the thermal joining performance when the aluminum alloy structure is produced. If the average grain size in the outermost layer is larger than 200 µm, the thermal joining performance when the aluminum alloy structure is produced decreases. That is, during thermal joining, the Al-Si-based liquid phase is generated in the grain boundaries of the one member to be joined and is supplied to the joined part by way of the grain boundaries, by which the joined part is filled with the liquid phase, which solidifies, thereby performing joining. However, if the average grain size in the outermost layer of the one member to be joined is large, the amount of the liquid phase supplied to the joined part will decrease due to fewer grain boundaries, and there is a concern that joining may be insufficient. For the above reasons, the average grain size in the outermost layer of the one member to be joined is specified as 200 µm or less. The average grain size in the outermost layer of the one member to be joined is preferably 180 µm or less, more preferably 160 µm or less, and more preferably 140 µm or less.

The average grain size is 400 µm or more in a section at a position with a depth of 100 µm of a part having the smallest wall thickness of the one member to be joined of the aluminum alloy structure of the present invention. The average grain size in the section at a position with a depth of 100 µm of the part having the smallest wall thickness is measured in a section at a position with a depth of 100 µm along the surface of the one member to be joined (that is, a section perpendicular to the depth direction at a position with a depth of 100 µm) with the surface of the one member to be joined as a depth reference (a zero position).

The average grain size in the section at a position with a depth of 100 µm of the part having the smallest wall thickness affects deformation during thermal joining. If the average grain size in the section at a position with a depth of 100 µm of the part having the smallest wall thickness is smaller than 400 µm, deformation during thermal joining becomes pronounced. That is, when the Al-Si-based liquid phase is generated in the grain boundaries during thermal joining, a lot of grain boundary slippage occurs when the average grain size is small; the part having the smallest wall thickness has particularly low stiffness and is thus greatly affected thereby, resulting in a large amount of deformation, and there is a concern that dimensional specifications may not be met. For the above reasons, the average grain size in the section at a position with a depth of 100 µm of the part having the smallest wall thickness is specified as 400 µm or more.

Note that the joining face and the part having the smallest wall thickness of the one member to be joined of the aluminum alloy structure of the present invention may be the same position or different positions.

The shape of the one member to be joined according to the aluminum alloy structure of the present invention preferably has a width of the part having the smallest wall thickness of 0.6 mm or more from the viewpoint of deformation resistance. If the width is less than 0.6 mm, there is a concern that the stiffness of the material may decrease, and the metallographic structure according to the present invention may not be obtained.

The thermal joining method of the present invention is a thermal joining method for the aluminum alloy structure of the present invention, the thermal joining method comprising causing a metallographic structure at 575°C during thermal joining to have an average grain size in an outermost layer of a face to be joined of 200 µm or less and an average grain size in a section at a position with a depth of 100 µm of a part having the smallest wall thickness of 400 µm or more.

In other words, the thermal joining method of the present invention is a thermal joining method in which one member to be joined and another member to be joined are heated and joined together in order to obtain the aluminum alloy structure of the present invention, the thermal joining method causing, in the heating for thermal joining of the one member to be joined and the other member to be joined, when the temperature of the one member to be joined reaches 575°C, the metallographic structure of the one member to be joined to have an average grain size in the outermost layer of the face to be joined of 200 µm or less and an average grain size in the section at a position with a depth of 100 µm of the part having the smallest wall thickness of 400 µm or more.

In the thermal joining method of the present invention, 575°C is the temperature immediately before a liquid phase is generated within the one member to be joined. Thus, the thermal joining method of the present invention is a thermal joining method that causes the metallographic structure immediately before the liquid phase is generated to have an average grain size in the outermost layer of the face to be joined of 200 µm or less, thereby forming many supply paths for the liquid phase on the surface layer and improving brazeability, and to have an average grain size in the section at a position with a depth of 100 µm of the part having the smallest wall thickness of 400 µm or more, thereby preventing grain boundary slippage inside the material and reducing deformation. The metallographic structure formed at 575°C is largely maintained even through subsequent heating and cooling.

In the thermal joining method of the present invention, for example, by heating the one member to be joined, which is manufactured by a method for producing the one member to be joined described below, to 580°C to 620°C at an average temperature increase rate of 5 to 100°C/min and heating to hold at 580°C to 620°C for about 0 minutes to 20 minutes, the metallographic structure of the one member to be joined can be caused to have an average grain size in the outermost layer in the face to be joined of 200 µm or less and an average grain size in the section at a position with a depth of 100 µm of the part having the smallest wall thickness of 400 µm or more.

The aluminum alloy extruded material of the present invention is an aluminum alloy extruded material having a thermal joining function with a single layer, the aluminum alloy extruded material comprising 1.80 to 3.00 mass % of Si, 0.10 to 1.60 mass % of Mn, and 0.01 to 0.70 mass % of Fe, with the balance being Al and unavoidable impurities,
a width of a part having the smallest wall thickness in a section perpendicular to an extrusion direction being 0.6 mm or more, and
an average grain size in an outermost layer of a face to be joined being 200 µm or less, and an average grain size in a section at a position with a depth of 100 µm of a part having the smallest wall thickness being 400 µm or more after a heating test that increases a temperature from 450°C to 575°C over 4 to 15 minutes, and holds at 575 to 615°C for 5 to 40 minutes.

The aluminum alloy extruded material of the present invention is formed of an aluminum alloy. In other words, the aluminum alloy extruded material of the present invention is an aluminum alloy material, and is formed of an aluminum alloy.

The aluminum alloy extruded material of the present invention has a thermal joining function with a single layer. In other words, the aluminum alloy extruded material of the present invention can be joined using a liquid phase generated inside the aluminum alloy material by heating, and is thus an aluminum alloy extruded material that can be joined to another member without using any joining material such as a placed brazing material despite of being a single layer (hereinafter also described as a single layer-joining aluminum alloy extruded material). In detail, the aluminum alloy extruded material of the present invention is an aluminum alloy extruded material having a thermal joining function with a single layer (an aluminum alloy extruded material having a single layer thermal joining function) at a temperature at which a liquid phase ratio is 5.0% or more and 35.0% or less.

The single layer-joining aluminum alloy extruded material is required to be joined at a temperature at which the ratio of the mass of the liquid phase formed inside the aluminum alloy material to the total mass of the aluminum alloy material (hereinafter referred to as the "liquid phase ratio") is 5% or more and 35% or less. If the liquid phase ratio exceeds 35%, the amount of the generated liquid phase is too large, and the aluminum alloy material cannot maintain its shape, resulting in large deformation. On the other hand, if the liquid phase ratio is less than 5%, joining is difficult. A preferred liquid phase ratio is 5 to 30%, and a more preferred liquid phase ratio is 10 to 20%.

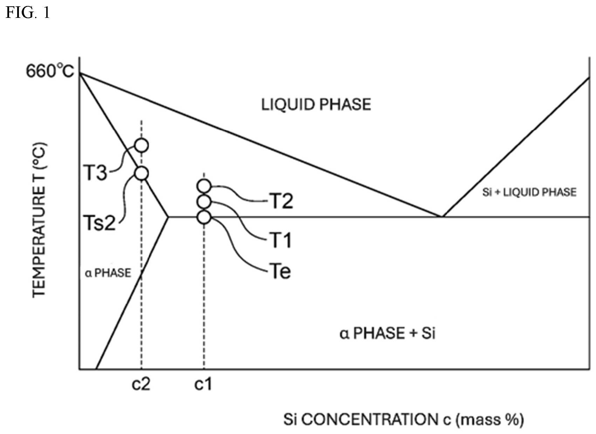

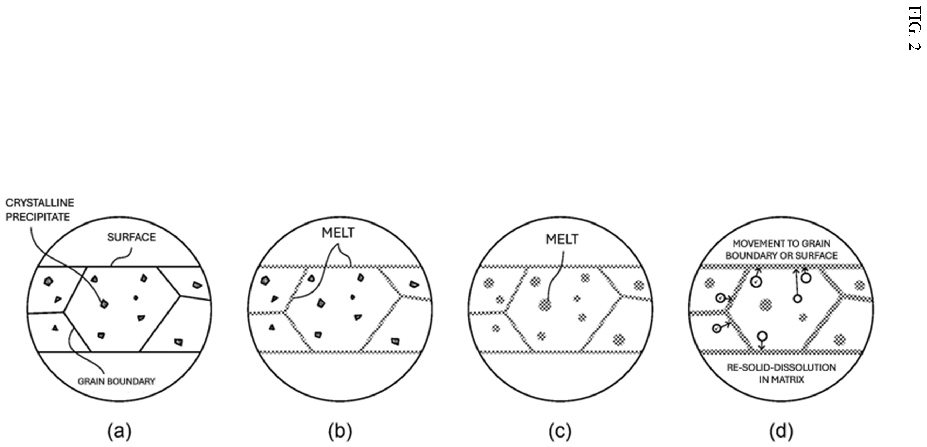

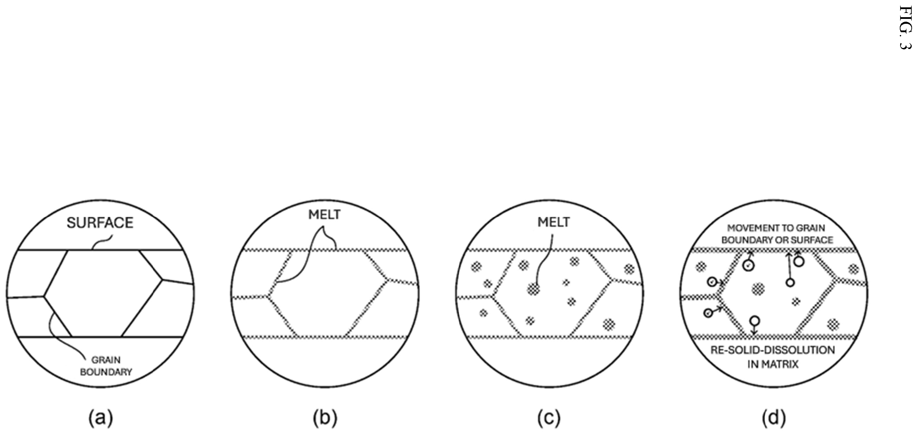

The mechanism of formation of the liquid phase will be described. FIG. 1 schematically illustrates a state diagram of an Al-Si alloy, which is a typical binary eutectic alloy. When an aluminum alloy material with a Si concentration of c1 is heated, the formation of the liquid phase starts at a temperature T1, which is near and above a eutectic temperature (a solid phase line temperature) Te. At the eutectic temperature Te or less, crystalline precipitates are distributed in a matrix divided by grain boundaries as illustrated in FIG. 2(a). When the formation of the liquid phase starts here, as illustrated in FIG. 2(b), the grain boundaries with a lot of segregation in the crystalline precipitate distribution melt to become the liquid phase. Next, as illustrated in FIG. 2(c), the peripheries of crystalline precipitate particles and intermetallic compounds of Si, which is the main additive elemental composition dispersed in the matrix of the aluminum alloy, melt spherically to form the liquid phase. Furthermore, as illustrated in FIG. 2(d), this spherical liquid phase generated in the matrix is solid dissolved in the matrix again with the passage of time or temperature increase due to interfacial energy, and moves to the grain boundaries or the surface through solid phase diffusion. Next, when the temperature increases to T2 as illustrated in FIG. 1, the amount of the liquid phase increases in accordance with the state diagram. As illustrated in FIG. 1, when the Si concentration of one aluminum alloy material is c2, which is less than the maximum solid solution limit concentration, the formation of the liquid phase starts near and above a solid phase line temperature Ts2. However, unlike the case of c1, the structure immediately before melting may not have any crystalline precipitates in the matrix as illustrated in FIG. 3(a). In this case, the grain boundaries first melt to become the liquid phase as illustrated in FIG. 3(b), and then the liquid phase is generated from places with a locally high solute element concentration in the matrix, as illustrated in FIG. 3(c). As illustrated in FIG. 3(d), as in the case of c1, this spherical liquid phase generated in the matrix is solid dissolved in the matrix again with the passage of time and temperature increase due to interfacial energy, and moves to the grain boundaries and the surface through solid phase diffusion. As the temperature increases to T3, the amount of the liquid phase increases in accordance with the state diagram. Thus, the joining in the present invention utilizes the liquid phase generated by partial melting inside the single layer-joining aluminum alloy extruded material, which can achieve both joining and shape maintenance.

The behavior of the metallographic structure from after the formation of the liquid phase to joining will be described. The single layer-joining aluminum alloy extruded material that generates the liquid phase and an aluminum alloy mating material to be joined thereto are combined with each other, and these are heated at a temperature at which the liquid phase ratio is 5.0% or more and 35.0% or less. When the joined part is observed under a microscope, as described above, a very small amount of the liquid phase generated on the surface of the single layer-joining aluminum alloy extruded material on joining fills a clearance with the aluminum alloy mating material in which an oxide film has been destroyed by the action of flux and the like. Next, the liquid phase near the joining interface between the two alloy materials moves into the aluminum alloy mating material, and along therewith, the grains of a solid phase α phase of the single layer-joining aluminum alloy extruded material in contact with the joining interface grow toward the inside of the aluminum alloy mating material. Meanwhile, the grains of the aluminum alloy mating material also grow toward the single layer-joining aluminum alloy extruded material. They are then joined together with a structure in which the structure of the single layer aluminum alloy extruded material seems to be embedded in the aluminum alloy mating material near the joining interface. Therefore, no metallographic structures other than the single layer-joining aluminum alloy extruded material or the aluminum alloy mating material are generated in the joining interface.

On the other hand, in the case of being joined to the aluminum alloy mating material by brazing heating using a brazing sheet cladded with a brazing material, fillets are formed in the joined part, and an eutectic structure is observed, and a joining structure different from that of the case of being joined to the aluminum alloy mating material by brazing heating using the single layer-joining aluminum alloy extruded material is formed. In other words, in the case of being joined to the aluminum alloy mating material by brazing heating using the brazing sheet cladded with a brazing material, a liquid phase brazing material fills the joined part to form fillets, and thus a eutectic structure different from that of the surrounding area is formed in the joined part. Also in the welding method, the joined part locally melts, resulting in a metallographic structure different from that of the other parts.

Given these circumstances, in the case of being thermally joined to the aluminum alloy mating material using the single layer-joining aluminum alloy extruded material, the joining structure is different from that of the case in which the brazing sheet cladded with a brazing material is used or the case of welding in that the metallographic structure of the joined part is composed only of both the members to be joined or composed of an integrated body of both the members to be joined.

Because of this joining behavior, in the case of being thermally joined to the aluminum alloy mating material using the single layer-joining aluminum alloy extruded material, there is almost no shape change near the joining part after the joining step. That is, post-joining shape changes such as beads in the welding method and fillets in the brazing method hardly occur in the case of being thermally joined to the aluminum alloy mating material using the single layer-joining aluminum alloy extruded material.

In the present invention, it is extremely difficult to measure the actual liquid phase ratio during heating of the single layer-joining aluminum alloy extruded material. Thus, the liquid phase ratio specified in the present invention shall be determined by equilibrium calculation. Specifically, it is calculated from an alloy composition and the highest maximum temperature during heating using thermodynamic equilibrium calculation software such as Thermo-Calc (registered trademark) manufactured by Thermo-Calc Software AB.

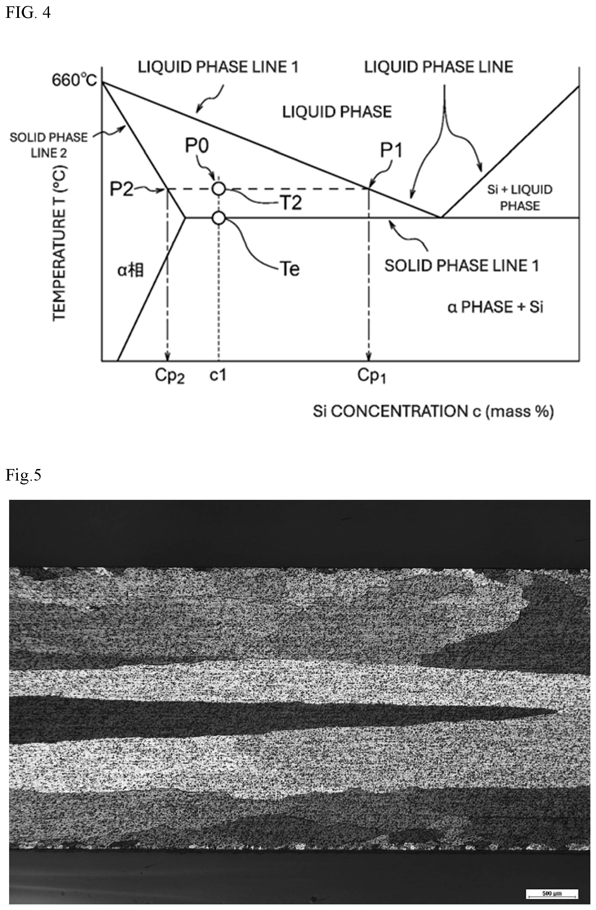

The relation between the liquid phase ratio and temperature will be described based on a state diagram illustrated in FIG. 4. FIG. 4 is a modification of FIG. 1. In FIG. 4, a line extending parallel to the horizontal axis through the temperature Te (hereinafter described as "solid phase line 1") and a line extending upward to the left from the left end of the solid phase line 1 to 660°C on the vertical axis while delineating the boundary with the α phase (hereinafter referred to as "solid phase line 2") both represent solid phase lines. A line extending downward to the right from 660°C on the vertical axis and tangent to the solid phase line 1 (hereinafter referred to as "liquid phase line 1") and a line extending upward to the right from the tangent position while delineating the boundary with (Si + liquid phase) both represent liquid phase lines.

Now let the point of the temperature T2 be P0, draw a line parallel to the horizontal axis of the figure passing through P0, and let the intersection with the liquid phase line 1 be P1 and the intersection with the solid phase line 2 be P2. An Al-Si alloy with a Si concentration of C1 is in a state in which a liquid phase and a solid phase are coexist at the temperature T2, in which the Si concentration in the liquid phase is a concentration C_{P1} at the point P1, and the Si concentration in the solid phase is a concentration C_{P2} at the point P2. The ratio of the mass of the liquid phase to the total mass at the temperature T2, that is, the liquid phase ratio is then the ratio of the length of a segment from P0 to P2 to the length of a segment from P1 to P2.

As described above, based on the state diagram of a binary alloy as illustrated in FIG. 1 and FIG. 4, the liquid phase ratio is determined by drawing from chemical compositions and temperature. Also in a ternary or more multi-component system, similarly, the liquid phase ratio can be determined by drawing from chemical compositions and temperature based on the state diagram also in a ternary or more multi-component system. Note that it is difficult to represent the state diagram of the ternary or more multi-component system as a simple X-Y plane diagram as in FIG. 4, but the liquid phase ratio can be obtained by computer calculation by using the Thermo-Calc thermodynamic equilibrium calculation software.

A member to be joined to be combined with the aluminum alloy extruded material of the present invention comprises an aluminum alloy or pure aluminum. In other words, the member to be joined to be combined with the aluminum alloy extruded material of the present invention is an aluminum alloy material or a pure aluminum material, and is formed of an aluminum alloy or pure aluminum. When the aluminum alloy material forming the member to be joined to be combined with the aluminum alloy extruded material of the present invention comprises an aluminum alloy, the aluminum alloy material forming the member to be joined to be combined with the aluminum alloy extruded material of the present invention may have the same alloy composition as the aluminum alloy material forming the aluminum alloy extruded material of the present invention or a different alloy composition therefrom.

The aluminum alloy forming the aluminum alloy extruded material of the present invention comprises 1.80 to 3.00 mass % of Si, 0.10 to 1.60 mass % Mn, and 0.01 to 0.70 mass % Fe, with the balance Al and unavoidable impurities.

Si is an element that generates an Al-Si-based liquid phase during thermal joining to contribute to joining. If the Si content of the aluminum alloy is less than 1.80 mass %, a sufficient amount of the liquid phase cannot be generated, resulting in poor joining performance. If the Si content exceeds 3.00 mass %, the aluminum alloy comprises a lot of single Si, causing a concern about significant wear in a tool in the manufacturing process of the aluminum alloy material. Therefore, the Si content of the aluminum alloy forming the aluminum alloy extruded material is specified as 1.80 to 3.00 mass%. The lower limit value of the Si content of the aluminum alloy forming the aluminum alloy extruded material of the present invention is preferably 2.00 mass %. The upper limit value of the Si content of the aluminum alloy forming the aluminum alloy extruded material is preferably 2.80 mass %. The Si content can be a range with the above upper limit value and lower limit value combined.

Mn is an element that adjusts the crystalline structure of the aluminum alloy material to contribute to improving thermal joining performance and inhibiting deformation during thermal joining. If the Mn content of the aluminum alloy is less than 0.10 mass %, the grain size according to the present invention cannot be obtained, and deformation during thermal joining becomes larger. If the Mn content exceeds 1.60 mass %, the deformation resistance of the aluminum alloy material becomes larger, and there is a concern that machining may become difficult in the manufacturing process of the aluminum alloy material. Therefore, the Mn content of the aluminum alloy forming the aluminum alloy extruded material of the present invention is specified as 0.10 to 1.60 mass %. The lower limit value of the Mn content of the aluminum alloy forming the aluminum alloy extruded material of the present invention is preferably 0.20 mass %, and more preferably 0.30 mass %. The upper limit value of the Mn content of the aluminum alloy forming the aluminum alloy extruded material of the present invention is preferably 1.40 mass %, more preferably 1.20 %, more preferably 1.00 mass %, and more preferably 0.80 mass %. The Mn content can be a range with the above upper limit value and lower limit value combined.

Fe is an element that contributes to improving the strength of the aluminum alloy material. If the Fe content of the aluminum alloy is less than 0.01 mass %, it is necessary to use an aluminum ingot with extremely high purity for manufacture, which increases the cost. If the Fe content exceeds 0.70 mass %, an Al-Fe-Si compound is generated, which reduces the amount of Si that contributes to the formation of the liquid phase during thermal joining, thus reducing thermal joining performance. Therefore, the Fe content of the aluminum alloy forming the aluminum alloy extruded material of the present invention is specified as 0.01 to 0.70 mass %. The lower limit value of the Fe content of the aluminum alloy forming the aluminum alloy extruded material of the present invention is preferably 0.05 mass %, more preferably 0.10 mass %, and more preferably 0.15 mass %. The upper limit value of the Fe content of the aluminum alloy forming the aluminum alloy extruded material of the present invention is preferably 0.60 mass %, more preferably 0.50 mass %, and more preferably 0.40 mass %. The Fe content can be a range with the above upper limit value and lower limit value combined.

The width of a part having the smallest wall thickness in a section perpendicular to an extrusion direction of the aluminum alloy extruded material of the present invention is 0.6 mm or more. If the width is less than 0.6 mm, there is a concern that the stiffness of the material may decrease, and the metallographic structure according to the present invention may not be obtained.

Next, the metallographic structure of the aluminum alloy extruded material of the present invention will be described.

The metallographic structure of the aluminum alloy extruded material of the present invention is such that the grains are made fine in the joining face in order to improve thermal joining performance and such that the grains inside the material are made coarse in order to inhibit deformation during thermal joining. These metallographic structures should actually be achieved immediately before forming the liquid phase. However, since the metallographic structure is usually maintained also after the end of thermal joining, the metallographic structure can be confirmed by any of a structure after thermal joining, a material that has undergone a heating test simulating thermal joining, and a material that has been heated until immediately before the liquid phase formation and then cooled. One form of heat treatment that performs heating until immediately before the formation of the liquid phase and immediate cooling includes performing heating to 580°C to 620°C at an average temperature increase rate of 5 to 100°C/min, heating to hold at 580°C to 620°C for about 0 minutes to 20 minutes, and then cooling.

The aluminum alloy extruded material of the present invention has an average grain size of 200 µm or less of the outermost layer of the face to be joined after a heating test that increases a temperature from 450°C to 575°C over 4 to 15 minutes, and holds at 575 to 615°C for 5 to 40 minutes. The average grain size in the outermost layer is measured in a section with a depth of 0 to 10 µm along the surface of the face to be joined (that is, a section perpendicular to the depth direction at a position with a depth of 0 to 10 µm) with the surface of the face to be joined as a depth reference (a zero position).

The average grain size in the outermost layer affects the thermal joining performance when the aluminum alloy structure is produced. If the average grain size in the outermost layer is larger than 200 µm, the thermal joining performance when the aluminum alloy structure is produced decreases. That is, during thermal joining, the Al-Si-based liquid phase is generated in the grain boundaries of face to be joined and is supplied to the joined part by way of the grain boundaries, by which the joined part is filled with the liquid phase, which solidifies, thereby performing joining. However, if the average grain size in the outermost layer of the face to be joined is large, the amount of the liquid phase supplied to the joined part will decrease due to fewer grain boundaries, and there is a concern that joining may be insufficient. For the above reasons, the average grain size in the outermost layer of the face to be joined is specified as 200 µm or less. The average grain size in the outermost layer of the face to be joined is preferably 180 µm or less, more preferably 160 µm or less, and more preferably 140 µm or less.

The aluminum alloy extruded material of the present invention has an average grain size of 400 µm or more in a section at a position with a depth of 100 µm of the part having the smallest wall thickness after a heating test that increases a temperature from 450°C to 575°C over 4 to 15 minutes, and holds at 575 to 615°C for 5 to 40 minutes. The average grain size in the section at a position with a depth of 100 µm of the part having the smallest wall thickness is measured in a section at a position with a depth of 100 µm along the surface of the face to be joined (that is, a section perpendicular to the depth direction at a position with a depth of 100 µm) with the surface of the face to be joined as a depth reference (a zero position).

The average grain size in the section at a position with a depth of 100 µm of the part having the smallest wall thickness affects deformation during thermal joining. If the average grain size in the section at a position with a depth of 100 µm of the part having the smallest wall thickness is smaller than 400 µm, deformation during thermal joining becomes pronounced. That is, when the Al-Si-based liquid phase is generated in the grain boundaries during thermal joining, a lot of grain boundary slippage occurs when the average grain size is small; the part having the smallest wall thickness has particularly low stiffness and is thus greatly affected thereby, resulting in a large amount of deformation, and there is a concern that dimensional specifications may not be met. For the above reasons, the average grain size in the section at a position with a depth of 100 µm of the part having the smallest wall thickness is specified as 400 µm or more.

The face to be joined and the part having the smallest wall thickness of the aluminum alloy extruded material of the present invention may be the same position or different positions.

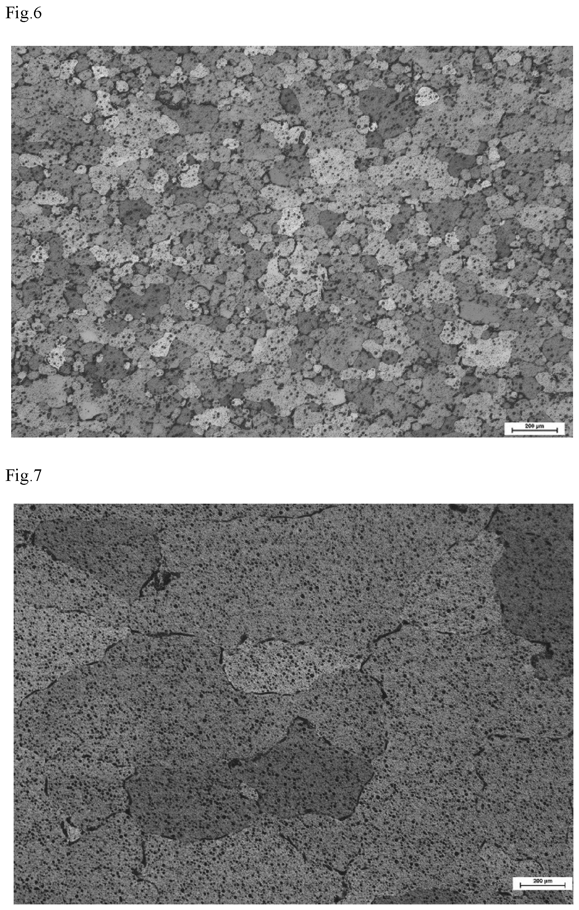

As an example of the metallographic structure of the aluminum alloy extruded material of the present invention, FIG. 5 to FIG. 7 illustrate the microstructure of the part to be joined and the part having the smallest wall thickness of the aluminum alloy extruded material after a heating test simulating thermal joining. FIG. 5 is the microstructure of a section parallel to the extrusion direction and the wall thickness direction. The area near the face to be joined has a fine recrystallized structure, while the inside of the material has a coarse recrystallized structure. FIG. 6 is the microstructure of a section perpendicular to the depth direction of the outermost layer. It is a fine recrystallized structure, which is suitable for thermal joining. FIG. 7 is the microstructure of a section perpendicular to the depth direction at a position with a depth of 100 µm. It is a coarse recrystallized structure, which is effective in inhibiting deformation during thermal joining.

Note that the average grain size in the present invention is an average grain size measured by a cutting method conforming to JIS G 0551.

Thus, the aluminum alloy extruded material of the present invention has a metallographic structure in which the average grain size in the outermost layer of the face to be joined is 200 µm or less, and the average grain size in the section at a position with a depth of 100 µm of the part having the smallest wall thickness is 400 µm or more when increasing a temperature from 450°C to 575°C over 4 to 15 minutes, and heating to hold at 575 to 615°C for 5 to 40 minutes.

Since the aluminum alloy extruded material of the present invention has the metallographic structure described above, a structure is formed in which the average grain size in the outermost layer of the face to be joined is 200 µm or less, and the average grain size in the section at a position with a depth of 100 µm of the part having the smallest wall thickness is 400 µm or more during thermal joining by the heat treatment that performs heating until immediately before the formation of the liquid phase and immediate cooling, for example, the heat treatment that performs heating to 580°C to 620°C at an average temperature increase rate of 5 to 100°C/min, heating to hold at 580°C to 620°C for about 0 minutes to 20 minutes, and then cooling, and thus it can be joined with a single layer, has good joining performance, and can inhibit deformation during thermal joining.

The aluminum alloy material as the one member to be joined for use in the aluminum alloy structure of the present invention and the aluminum alloy extruded material of the present invention can be produced by combining continuous casting, DC casting, extrusion, and rolling as appropriate. The aluminum alloy material and the pure aluminum material as the other member to be joined for use in the aluminum alloy structure of the present invention can be produced by combining continuous casting, DC casting, extrusion, and rolling as appropriate. New aluminum ingots, recycled aluminum ingots, intermediate alloys, and scrap aluminum can be used as casting raw materials.

A method for producing the aluminum alloy material as the one member to be joined for use in the aluminum alloy structure of the present invention and the aluminum alloy extruded material of the present invention comprises:
a casting step of casting an ingot comprising 1.80 to 3.00 mass % of Si, 0.10 to 1.60 mass % of Mn, and 0.01 to 0.70 mass % of Fe, with the balance being Al and unavoidable impurities; and
a hot extruding step of hot extruding the ingot while a temperature of the ingot is 400°C or more and 550°C or less to form a shape having a width of a part having the smallest wall thickness in a section perpendicular to an extrusion direction of 0.6 mm or more.
In addition, the method for producing the aluminum alloy material as the one member to be joined for use in the aluminum alloy structure of the present invention and the aluminum alloy extruded material of the present invention can further comprise a homogenizing step of performing a homogenizing treatment that holds the ingot at a temperature of 570°C or less after the casting step and before the hot extruding step.

The casting step is a step of casting an ingot comprising 1.80 to 3.00 mass % of Si, 0.10 to 1.60 mass % of Mn, 0.01 to 0.70 mass % of Fe, with the balance being Al and unavoidable impurities by DC casting, continuous casting, or the like. The lower limit value of the Si content of the ingot is preferably 2.00 mass %, and the upper limit value of the Si content of the ingot is preferably 2.80 mass %. The lower limit value of the Mn content of the ingot is preferably 0.20 mass %, and more preferably 0.30 mass %. The upper limit value of the Mn content of the ingot is preferably 1.40 mass %, more preferably 1.20 mass %, more preferably 1.00 mass %, and more preferably 0.80 mass %. The lower limit value of the Fe content of the ingot is preferably 0.05 mass %, more preferably 0.10 mass %, and more preferably 0.15 mass %. The upper limit value of the Fe content of the ingot is preferably 0.60 mass %, more preferably 0.50 mass %, and more preferably 0.40 mass %. The Si, Mn, and Fe contents can be a range with the above upper limit value and lower limit value combined.

After performing the casting step, the homogenizing treatment that holds the ingot at a temperature of 570°C or less, preferably 450 to 570°C can be performed as needed. The holding time of the homogenizing treatment is selected as appropriate, and is preferably 2 hours or more, and more preferably 2 to 24 hours. The homogenizing treatment has the effect of resolving microsegregation in the ingot structure of a billet to homogenize the structure. If the temperature of the homogenizing treatment is higher than 570°C, the billet may partially melt. If the time of the homogenizing treatment is shorter than 2 hours, the diffusion energy may be insufficient, and the microsegregation of the ingot structure of the billet may not be resolved. From the viewpoint of productivity, the time of the homogenizing treatment is preferably 24 hours or less.

The hot extruding step is a step of hot extruding the ingot while the temperature of the ingot is 400°C or more and 550°C or less to form a shape having a width of a part having the smallest wall thickness in a section perpendicular to an extrusion direction of 0.6 mm or more. The temperature of hot extrusion is preferably 400°C or more and 550°C or less. If the extrusion temperature is lower than 400°C, the extrusion pressure will be higher, and extrusion may be difficult. If the extrusion temperature is higher than 550°C, ripping defects are likely to occur in an extruded aluminum alloy tube during extrusion. At this time, the extrusion ratio in hot extrusion is preferably 20 or more and 1,000 or less. The extrusion ratio in hot extrusion being 20 or more and 1,000 or less makes the work strain applied to the surface by hot extrusion sufficient, and the metallographic structure according to the present invention can be obtained. The extrusion ratio is the ratio between the sectional area of a container into which the billet before extrusion is inserted and the sectional area of the extruded material. If the extrusion ratio is smaller than 20, the work strain applied by hot extrusion will be insufficient, and there is a concern that the metallographic structure according to the present invention may not be obtained. On the other hand, if the extrusion ratio is larger than 1,000, the load during extrusion becomes larger, which hinders extrudability. The lower limit of the extrusion ratio is preferably 20 or more, more preferably 40 or more, and even more preferably 60 or more.

Examples of the method for producing the aluminum alloy material as the one member to be joined for use in the aluminum alloy structure of the present invention and the aluminum alloy extruded material of the present invention include a method of producing a billet by continuous casting, DC casting, or the like, performing the homogenizing treatment as needed, and then performing hot rolling. As the conditions for hot rolling, conditions making the surface of the billet strain to the extent that the metallographic structure according to the present invention is obtained may be selected as appropriate.

A method of joining in the manufacture of the aluminum alloy structure of the present invention and a method for joining the aluminum alloy extruded material of the present invention with another member will be described.

It is preferable to perform joining at a temperature at which the ratio of the mass of the liquid phase generated inside the aluminum alloy material to the total mass of the aluminum alloy material as the one member to be joined or the aluminum alloy material forming the aluminum alloy extruded material of the present invention (hereinafter referred to as "liquid phase ratio") is 5% or more and 35% or less. If the liquid phase ratio exceeds 35%, the amount of the generated liquid phase is too large, and the aluminum alloy material cannot maintain its shape, resulting in large deformation. On the other hand, if the liquid phase ratio is less than 5%, joining is difficult. Note that it is extremely difficult to measure the actual liquid phase ratio during heating. Thus, the liquid phase ratio shall be determined by equilibrium calculation. Specifically, it is calculated from an alloy composition and the highest maximum temperature during heating using thermodynamic equilibrium calculation software such as Thermo-Calc.

In order for the liquid phase to fill the joined part sufficiently, the filling time is preferably considered, and the time for the liquid phase ratio to be 5% or more is preferably 30 seconds or more and 3,600 seconds or less. More preferably, the time for the liquid phase ratio to be 5% or more is 60 seconds or more and 1,800 seconds or less, which achieves more sufficient filling and secure joining. If the time for the liquid phase ratio to be 5% or more is less than 30 seconds, the joined part may not be sufficiently filled with the liquid phase. On the other hand, if the time exceeds 3,600 seconds, the deformation of the aluminum material may progress. Note that since the liquid phase moves only in the extreme vicinity of the joined part in the method of joining of the present invention, the time required for this filling does not depend on the size of the joined part.

As a specific example of desirable joining conditions, the joining temperature may be 580°C to 620°C and the holding time at the joining temperature may be about 0 minutes to 20 minutes. The average temperature increase rate to the joining temperature is 5 to 100°C/min. A holding time of 0 minutes means that cooling is started immediately after the temperature of the member reaches a predetermined joining temperature. To bring the metallographic structure of the joined part into a suitable state described below, the heating conditions may be adjusted in accordance with the composition.

An oxide film is formed on the surface layer of the aluminum alloy material, which hinders joining. Thus, it is necessary to destroy the oxide film in joining. It is preferable to apply flux to at least the joined part in order to destroy the oxide film. As the flux, fluoride-based fluxes such as KAlF₄ and CsAlF₄ or chloride-based fluxes such as KCl and NaCl used for brazing aluminum alloys are used. These fluxes melt before the liquid phase is generated or before the joining temperature is reached, and react with the oxide film to destroy the oxide film. Furthermore, in this method, to inhibit the formation of the oxide film, joining is performed in a non-oxidizing atmosphere such as nitrogen gas or argon gas. In particular, when a fluoride-based flux is used, it is preferable to perform joining in a non-oxidizing gas atmosphere with an oxygen concentration kept to 250 ppm or less and a dew point kept to -25°C or less.

Examples are given below to specifically describe the present invention, but the present invention is not limited to the examples shown below.

### [Examples]

### (Examples and Comparative Examples)

### <Manufacture of Aluminum Alloy Extruded Material>

First, ingots having the chemical compositions (alloy symbols A1 to A7) listed in Table 1 were cast by DC casting. The shape of the ingots was cylindrical with a diameter of 90 mm. The ingots were then heated for a homogenizing treatment. The holding temperature and the holding time in the homogenizing treatment were held at 530°C for 8 hours. After the homogenizing treatment was completed, the ingot was inserted into a preheated container with a diameter of 97 mm while the temperature of the ingot was 520°C, and hot extruded into a flat bar shape with a width of 35 mm and thickness of 3.0 mm. Aluminum alloy extruded materials were obtained by the above method.

**[Table 1]**

| Alloy No. | Chemical composition (mass %) | | | | | | | | |
|---|---|---|---|---|---|---|---|---|---|
| | Si | Fe | Cu | Mn | Mg | Cr | Zn | Ti | Al |
| A1 | 2.00 | 0.20 | - | 0.50 | - | - | - | - | Balance |
| A2 | 2.00 | 0.20 | - | 1.00 | - | - | - | - | Balance |
| A3 | 2.50 | 0.20 | - | 0.50 | - | - | - | - | Balance |
| A4 | 2.50 | 0.20 | - | 1.00 | - | - | - | - | Balance |
| A5 | 2.50 | 0.20 | - | 1.50 | - | - | - | - | Balance |
| A6 | 1.50 | 0.20 | - | < 0.01 | - | - | - | - | Balance |
| A7 | 2.50 | 0.20 | - | < 0.01 | - | - | - | - | Balance |

### <Grain Size after Heating Test Simulating Thermal Joining>

By the same method of manufacture as described above, ingots formed of the alloys A1 to A7 listed in Table 2 were hot extruded with the extrusion ratio listed in Table 2 to produce aluminum alloy extruded materials B1 to B5 and C1 and C2 with a width of 35 mm and a thickness of 3.0 mm, and an ingot formed of the alloy A3 listed in Table 2 was hot extruded with the extrusion ratio listed in Table 2 to produce an aluminum alloy extruded material C3 with a width of 60 mm and a thickness of 15 mm.

Next, after a heating test that increased the temperature from 450°C to 575°C over 4 to 15 minutes, and held at 575°C to 615°C for 5 to 40 minutes, they were cooled to the room temperature to obtain test materials B1 to B5 and test materials C1 to C3 after the heating test. Then, the material surface parallel to the extrusion direction and the width direction was assumed to be the face to be joined, grinding and polishing were performed at the outermost surface and at a position with a depth of 100 µm from the surface to prepare the surface. Furthermore, etching was performed, and one randomly selected field of view of each was photographed using a polarization microscope at 50x magnification, and the average grain size was measured by a cutting method conforming to JIS G 0551.

**[Table 2]**

| | Test material No. | Alloy No. | Extrusion ratio | Average grain size after thermal joining [µm] | |
|---|---|---|---|---|---|
| | | | | Outermost layer | Depth of 100 µm |
| Example | B1 | A1 | 66 | 102 | 518 |
| Example | B2 | A2 | 66 | 73 | 1,000 or more |
| Example | B3 | A3 | 66 | 64 | 650 |
| Example | B4 | A4 | 66 | 138 | 1,000 or more |
| Example | B5 | A5 | 66 | 123 | 1,000 or more |
| Comparative Example | C1 | A6 | 66 | 92 | 111 |
| Comparative Example | C2 | A7 | 66 | 98 | 124 |
| Comparative Example | C3 | A3 | 8 | 1,000 or more | 1,000 or more |

As listed in Table 2, the test materials B1 to B5 had the average grain size specified in the present invention. On the other hand, the test materials C1 and C2 had a lower Mn content, and thus had an average grain size at the position with a depth of 100 µm smaller than the range specified in the present invention. Therefore, there was a possibility of pronounced deformation during thermal joining. The test material C3 had a smaller extrusion ratio, and thus had an average grain size in the outermost layer larger than the range specified in the present invention. In the aluminum alloy material having a thermal joining function with a single layer, grain boundaries are supply paths for the liquid phase, but the test material C3 has a very large average grain size in the outermost layer, and thus it is assumed that there are very few supply paths for the liquid phase brazing material. Hence, the test material C3 had a possibility of lowered thermal joining performance.

### <Evaluation of Thermal Joining Performance and High-Temperature Deformation Resistance>

Materials were prepared by the same method of manufacture as described above to obtain test materials B1 to B5 and test materials C1 and C2.

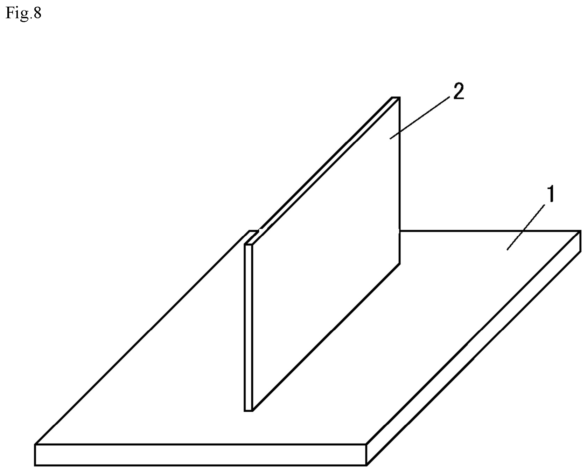

To evaluate thermal joining performance, an inverted T-shaped joining test was performed using a test piece (symbol 1) illustrated in FIG. 8. Each test material was cut to a length of 60 mm, and a fluoride-based flux was applied to the face to be joined. An A3003 aluminum alloy sheet with a thickness of 1.0 mm (symbol 2) was erected at the center of the joining face of each test material in the width direction, combined in an inverted T-shape, and heat-treated for thermal joining. As heat treatment conditions, the temperature was increased from 450°C to 575°C over 4 minutes, held at 600°C for 3 minutes, and then cooled to room temperature. Thereafter, the presence or absence of joining was checked by section observation, and a joined one was evaluated as "Pass" and a not-joined one was evaluated as "Fail." Table 3 lists the results.

To evaluate high-temperature deformation resistance, a sag test was performed as follows. Each test material was cut to a length of 130 mm, the end of the test material was fixed with 100 mm of which sticking out horizontally, and was heat-treated for thermal joining. As heat treatment conditions, the temperature was increased from 450°C to 575°C over 6 minutes, held at 600°C for 3 minutes, and then cooled to room temperature. Thereafter, the sagging amount of each test material was measured, and evaluated as "Pass, excellent" when the sagging amount was 2 mm or less, "Pass, good" when the sagging amount was more than 2 mm and 5 mm or less, "Fail, poor" when the sagging amount was more than 5 mm and 20 mm or less, and "Fail, very poor" when the sagging amount was more than 20 mm. Table 3 lists the results.

**[Table 3]**

| | Test material No. | Alloy No. | Thermal joining performance | | High-temperature deformation resistance | |
|---|---|---|---|---|---|---|
| | | | Presence or absence of joining | Pass or fail | Sagging amount [mm] | Pass or fail |
| Example | B1 | A1 | Joined | Pass | 1.0 | Pass, excellent |
| Example | B2 | A2 | Joined | Pass | 1.8 | Pass, excellent |
| Example | B3 | A3 | Joined | Pass | 2.0 | Pass, excellent |
| Example | B4 | A4 | Joined | Pass | 3.5 | Pass, good |
| Example | B5 | A5 | Joined | Pass | 3.5 | Pass, good |
| Comparative Example | C1 | A6 | Not-joined | Fail | 8.3 | Fail, poor |
| Comparative Example | C2 | A7 | Joined | Pass | 100 (Break) | Fail, very poor |

The test materials B1 to B5 had good thermal joining performance and high-temperature deformation resistance. On the other hand, the test material C1 had a lower Si content than the range specified in the present invention, and thus had poor thermal joining performance. The test material C2 had a lower Mn content than the range specified in the present invention, and thus had a smaller average grain size at the position with a depth of 100 µm smaller than the range specified in the present invention. As a result, it had pronounced deformation after heating, and had poor high-temperature deformation resistance.

The examples of the aluminum alloy structure of the present invention, and the aluminum alloy extruded material and the method for producing the same of the present invention have been described based on Examples, but specific aspects of the aluminum alloy structure according to the present invention, and the aluminum alloy extruded material and the method for producing the same of the present invention are not limited to the aspects of Examples, and the configurations can be changed as appropriate to the extent that the gist of the present invention is not impaired.

## Claims

1. An aluminum alloy structure comprising one member to be joined formed of an aluminum alloy and another member to be joined formed of either an aluminum alloy or pure aluminum, the members being thermally joined together,
the one member to be joined comprising 1.80 to 3.00 mass % of Si, 0.10 to 1.60 mass % of Mn, and 0.01 to 0.70 mass % of Fe, with the balance being Al and unavoidable impurities, and
an average grain size being 200 µm or less in an outermost layer of the one member to be joined in a joined part between the one member to be joined and the other member to be joined, and an average grain size being 400 µm or more in a section at a position with a depth of 100 µm of a part having a smallest wall thickness of the one member to be joined.

2. A thermal joining method for the aluminum alloy structure according to claim 1, the thermal joining method comprising causing a metallographic structure at 575°C during thermal joining to have an average grain size in an outermost layer of a face to be joined of 200 µm or less and an average grain size in a section at a position with a depth of 100 µm of a part having a smallest wall thickness of 400 µm or more.

3. An aluminum alloy extruded material having a thermal joining function with a single layer, the aluminum alloy extruded material comprising 1.80 to 3.00 mass % of Si, 0.10 to 1.60 mass % of Mn, and 0.01 to 0.70 mass % of Fe, with the balance being Al and unavoidable impurities,
a width of a part having a smallest wall thickness in a section perpendicular to an extrusion direction being 0.6 mm or more, and
an average grain size in an outermost layer of a face to be joined being 200 µm or less, and an average grain size in a section at a position with a depth of 100 µm of a part having the smallest wall thickness being 400 µm or more after a heating test that increases a temperature from 450°C to 575°C over 4 to 15 minutes, and holds at 575 to 615°C for 5 to 40 minutes.

4. A method for producing the aluminum alloy extruded material according to claim 3, the method comprising:
a casting step of casting an ingot comprising 1.80 to 3.00 mass % of Si, 0.10 to 1.60 mass % of Mn, and 0.01 to 0.70 mass % of Fe, with the balance being Al and unavoidable impurities; and
a hot extruding step of hot extruding the ingot while a temperature of the ingot is 400°C or more and 550°C or less to form a shape having a width of a part having a smallest wall thickness in a section perpendicular to an extrusion direction of 0.6 mm or more.

5. The method for producing the aluminum alloy extruded material according to claim 4, further comprising a homogenizing step of performing a homogenizing treatment that holds the ingot at a temperature of 570°C or less after the casting step.
